# EUROPEAN PATENT SPECIFICATION

(11) **EP 4 019 794 B1**
(45) Date of publication and mention of the grant of the patent: **27.11.2024**
(21) Application number: 21215844.8
(22) Date of filing: 20.12.2021
(51) Int. Cl.: F16D 25/0638, F16D 25/12

(54) **POWER TAKE-OFF ASSEMBLY OF A WORK VEHICLE COMPRISING A HYDRAULIC ARRANGEMENT FOR CONTROLLING A CLUTCH AND A CONTROL METHOD FOR A HYDRAULIC CONTROLLED CLUTCH**
ZAPFWELLENANORDNUNG EINES ARBEITSFAHRZEUGS MIT EINER HYDRAULISCHEN ANORDNUNG ZUR STEUERUNG EINER KUPPLUNG UND STEUERUNGSVERFAHREN FÜR EINE HYDRAULISCHE GESTEUERTE KUPPLUNG
ENSEMBLE PRISE DE FORCE D'UN VÉHICULE DE TRAVAIL COMPRENANT UN AGENCEMENT HYDRAULIQUE POUR COMMANDER UN EMBRAYAGE ET PROCÉDÉ DE COMMANDE POUR UN EMBRAYAGE À COMMANDE HYDRAULIQUE

(30) Priority: 23.12.2020 IT 202000032144
(43) Date of publication of application: 29.06.2022
(73) Proprietor: CNH Industrial Italia S.p.A., 10156 Torino (IT)
(72) Inventor: Huber, Roland, 4391 Waldhausen (AT)
(74) Representative: CNH Industrial IP Department

(56) References cited:
- EP-A2- 1 998 061
- JP-A- H0 419 426

## Description

### TECHNICAL FIELD

The present invention concerns a power take-off assembly for a work vehicle comprising a hydraulic arrangement, in particular a hydraulic arrangement for operating clutch means of such power take-off assembly.

### BACKGROUND OF THE INNOVATION

Work vehicles such as agricultural vehicles comprise a power take-off (PTO) assembly provided with a powertrain configured to provide a torque at an output shaft to carry operational means of the work vehicle as shown in EP1998061A2 and JPH0419426A.

Such PTO powertrain usually comprise at least one clutch, which is configured to engage and disengage two or more rotating shafts of the PTO, e.g. an input shaft to the output shaft of the PTO.

The aforementioned clutch may be a wet clutch actuated by a hydraulic signal that is modulated by a dedicated valve. Such valve is normally housed in the PTO assembly or on its housing and configured to use a portion of the oil supplied from the work vehicle to control the clutch.

Since the valve is positioned in the PTO assembly or on its housing, it is clear that there is a waste of space and that the piping that connect such valve to the clutch have a complicated topology.

Furthermore, the current designs of the hydraulic arrangement to provide the actuation signal are configured to lubricate the clutch arrangement only during its activation.

However, it is known that vehicles provided with a PTO continuously activate and deactivate the clutch. Accordingly, lamellas of the clutch tends to overheat thereby leading to increased wear and to oil degradation. Therefore, the useful life of the PTO decreases.

In view of the above, the need is felt to provide a PTO assembly comprising a hydraulic arrangement that allows to control the actuation of the clutch of the work vehicle That is compact, unexpansive and that may allow the cooling of the clutch in a continuous way.

An aim of the present innovation is to satisfy the above mentioned needs in a cost effective and optimized manner.

### SUMMARY OF THE INNOVATION

The aforementioned aim is reached by a power take-off assembly comprising a hydraulic arrangement and a control method as claimed in the appended independent claims.

Preferred embodiments of the innovation are realized according to the claims dependent or related to the above independent claim.

### BRIEF DESCRIPTION OF DRAWINGS

For a better understanding of the present invention, a preferred embodiment is described in the following, by way of a non-limiting example, with reference to the attached drawings wherein:
- Figure 1 is a longitudinal section view of a power take-off assembly comprising a hydraulic arrangement according to the present invention in a first operational condition;
- Figure 2 is an enlarged portion view of the power take-off assembly of figure 1 in a second operational condition;
- Figure 3 is the enlarged portion view of the power take-off assembly of figure 2 in a further operational condition with arrows indicating the passage of fluid in the hydraulic arrangement; and
- Figure 4 is the enlarged portion view of the power take-off assembly of figure 2 with arrows indicating the passage of fluid in the hydraulic arrangement;

### DETAILED DESCRIPTION OF THE INVENTION

In the drawings reference number 1 discloses a power take-off, PTO, assembly of a work vehicle (not shown) ad configured to allow the torque transmission between a first shaft 2 and a second shaft 3.

The PTO assembly 1 comprises a housing 4 configured to delimit an inner space 5 configured to house a transmission 6 configured to regulate the torque flow between first and second shafts 2, 3.

The housing 4 is furthermore configured to define a pair of openings 4a, 4b configured to allow the insertion of an inner portion of first and second shafts 2, 3 inside inner space 5 and to allow the support of first and second shafts 2,3 in a rotatable free manner, e.g. via bearings.

In particular, in the disclosed embodiment, the first shaft 2 is an input shaft and preferably defines a seat 2a configured to allow the coupling with a torque providing element, e.g. another shaft operationally coupled to a source of torque of the work vehicle , e.g. via a splined coupling realized on the inner surface of a seat 2.

Conversely, the second shaft 3 is an output shaft and preferably defines a coupling portion 3a configured to allow the coupling with an operational element, e.g. a working element that can be selectively attached to the work vehicle and using the provided torque. The coupling of such working element may be achieved via a splined coupling realized on the outer surface of the coupling portion 3a.

According to the shown embodiment, the first and the second shafts 2, 3 are coaxial one with respect to the other along a longitudinal axis A that is the rotational axis of both shafts 2, 3.

The transmission 6 may comprises a plurality of different elements, such as gears, but essentially comprises, as exemplarily shown, a clutch assembly 7. In the disclosed example the clutch assembly 7 is configured to selectively couple the first and second shafts 2, 3.

The clutch assembly 7 is interposed between a first intermediate element 8 fixedly carried by the first shaft 2 and a second intermediate element 9 fixedly carried by second shaft 3. The clutch assembly 7 is realized between such first and second intermediate elements 8, 9 and comprises a plurality of lamellas 10 carried from both the first and second intermediate elements 8, 9 in an alternative way and that are configured to selectively cooperate by axial contact one with the other.

In the disclosed embodiment, the first intermediate element 8 has a substantial "S" shaped cross section comprising an inner annular portion 8a engaging the first shaft 2, an intermediate disc portion 8b extending radially from the inner annular portion 8a inside the inner space 5 and an outer annular portion 8c extending cantilevered from intermediate disc portion 8b, parallel with respect to inner annular portion 8a but in an opposite direction with respect to this latter.

Instead, the second intermediate element 9 has a has a substantial "C" shaped cross section comprising an inner annular portion 9a engaging the second shaft 3, an intermediate disc portion 9b extending radially from the inner annular portion 9a inside the inner space 5 and an outer annular portion 9c extending cantilevered from intermediate disc portion 9b, parallel with respect to inner annular portion 9a and extending in the same direction with respect to this latter.

In greater detail, the outer annular portion 8c of the first intermediate element 8 is placed and spaced radially between the inner annular portion 9a and the outer annular portion 9c of the second intermediate element 9. Both the outer annular portions 8c, 9c carry the lamellas 10 that radially extends, alternatively along axis A, between such two outer annular portions 8c, 9c.

Lamellas 10 can be engaged axially in contact thanks to an actuation pressure given by an actuator element 11. In the disclosed embodiment the actuator element 11 is slidable coupled to second intermediate element 9.

In greater detail, the actuator element 11 is an annular body having a "C" shaped cross section similar to the cross section of the second intermediate element 9 and is radially and axially housed inside the latter. Accordingly, the actuator element 11 comprises an inner annular portion 11a engaging the inner annular portion 8, an intermediate disc portion 11b extending radially from the inner annular portion 11a between the inner and outer annular portions 9a, 9c and an outer annular portion 11c extending cantilevered from intermediate disc portion 11b, parallel with respect to inner annular portion 11a and extending in the same direction with respect to this latter. The outer annular portion 11c is configured to slide in contact with the outer annular portion 9c of the second intermediate element 9.

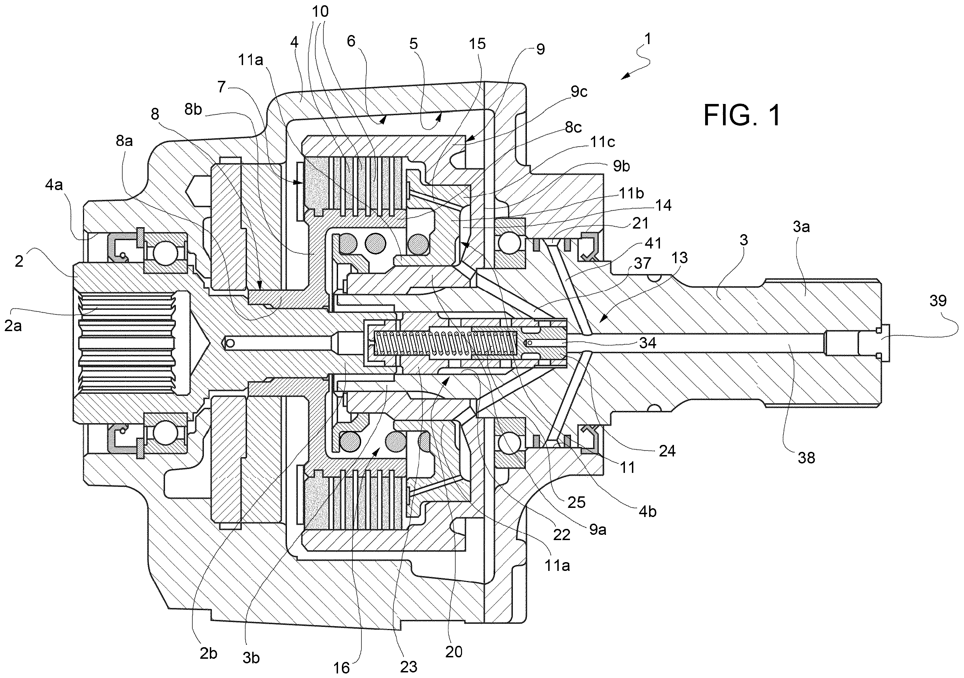

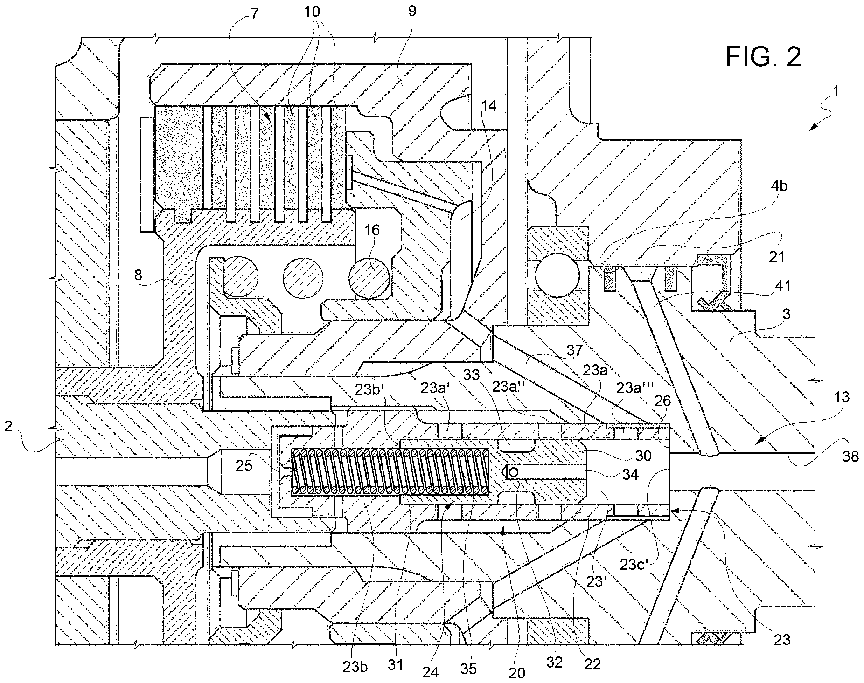

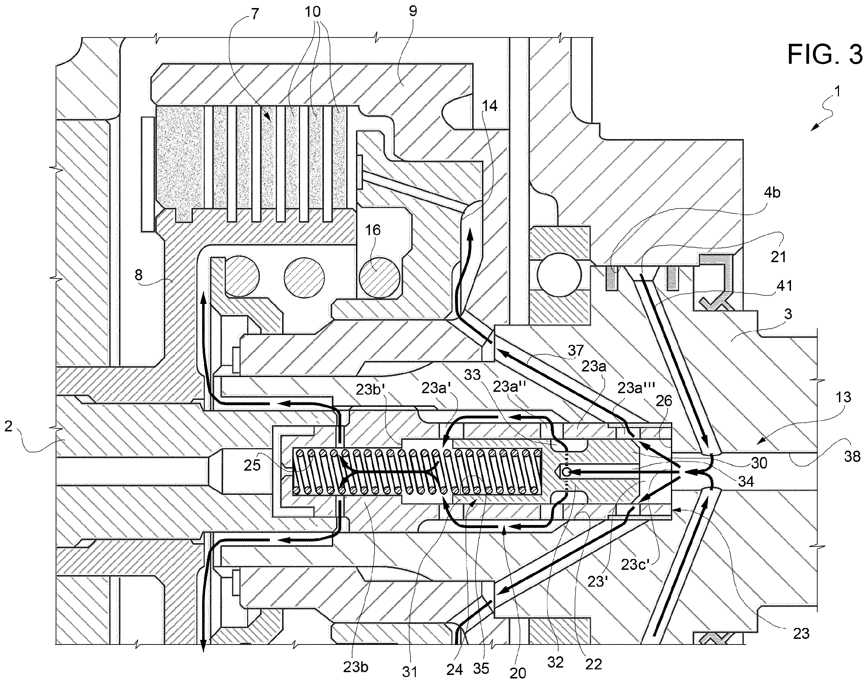

The actuator element 11 engages second intermediate element 9 in a translational free manner so as to assume a first operating condition (shown in figures 1, 3) into which he does not engage lamellas 10, thereby leading rotationally free first and second intermediate elements 8, 9 with respect to each other, and a second operating position (shown in figures 2, 3) into which he engages lamellas 10, thereby rotationally coupling first and second intermediate elements 8, 9 together.

The actuation to pass between first and second operating condition of actuator element 11 is given by a hydraulic fluid pressure provided by a hydraulic arrangement 13 as further described below.

In particular, the fluid provided by the hydraulic arrangement 13 is configured to selectively flow into a chamber 14 that is radially delimited by inner and outer portions 9a, 9c of second intermediate element 9 and axially delimited between the intermediate disc portion 9b and the intermediate disc portion 11b of actuator element 11. Actuator element may slide between the inner and outer portions 9a, 9c in function of the fluid pressure inside chamber 14. According to such pressure, chamber 14 may vary its axial dimension between two limit axial dimensions corresponding to the two operational conditions of actuator element 11.

The chamber 14 is fluidly connected to clutch assembly 7 by a duct 15 that bypass actuator element 11 and that allows the communication between chamber 14 and inner space 5 that are otherwise fluidly separated, except for such duct 15. Duct 15 allows the passage of an amount of fluid to vent chamber 14.

The actuator element 11 is maintained in the first above described configuration thanks to actions of elastic means 16 configured to impart a force that is opposed to the force of the pressure given by the fluid in chamber 14. In the described embodiment the elastic means 16 comprises a coil spring acting between the intermediate disc portion 11b of the actuator element 11 and a flanged portion 9d integral to inner annular portion 9a of the second intermediate element 9.

The hydraulic clutch control arrangement 13 essentially comprises a valve 20 configured to regulate the flow coming from a source 21 of pressurized oil. Advantageously, such valve 20 is a hydraulic actuated proportional valve.

Advantageously the valve 20 comprises a housing 23 fixedly housed inside a seat 22 and accommodating a spool 24. The seat 22 is realized within an inner portion 2b, 3b of one between first and/or second shafts 2, 3. In the disclosed example, seat 22 is realized within inner portion 3b of second shaft 3.

Seat 22 is realized parallel to, and preferably concentric, to longitudinal axis A and therefore housing 23 is similarly realized and defines a space 23' into which the spool 24 may move longitudinally along axis A. Always according to the disclosed embodiment, the inner portion 2b of first shaft 2 is housed radially, without contact, within the inner portion 3b of second shaft 3 in face of seat 22 that is opened towards first shaft 2.

Masking reference to figure 2, the housing 23 is substantially cylindrical and comprises a radial wall 23a and an axial wall 23b faced to first shaft 2. The axial wall 23b defines respective a respective opening 23b' while the radial wall is opened from the opposite side defining an opening 23c'. The opening 23b' of axial wall 23b' has a diameter lower than the diameter of spool 24 while the opening 23c' has a diameter equal to the one of spool 24 to allow its mounting.

Valve 20 further comprises elastic means 25 configured to impart a force against the movement of spool 24 as described below and axially in contact with the spool 24 and the first shaft 2. Accordingly, elastic means 25 are housed in space 23', passes through opening 23b' and partially in inner space 5 till contact first shaft 2. Preferably such elastic means 25 comprises a coil spring.

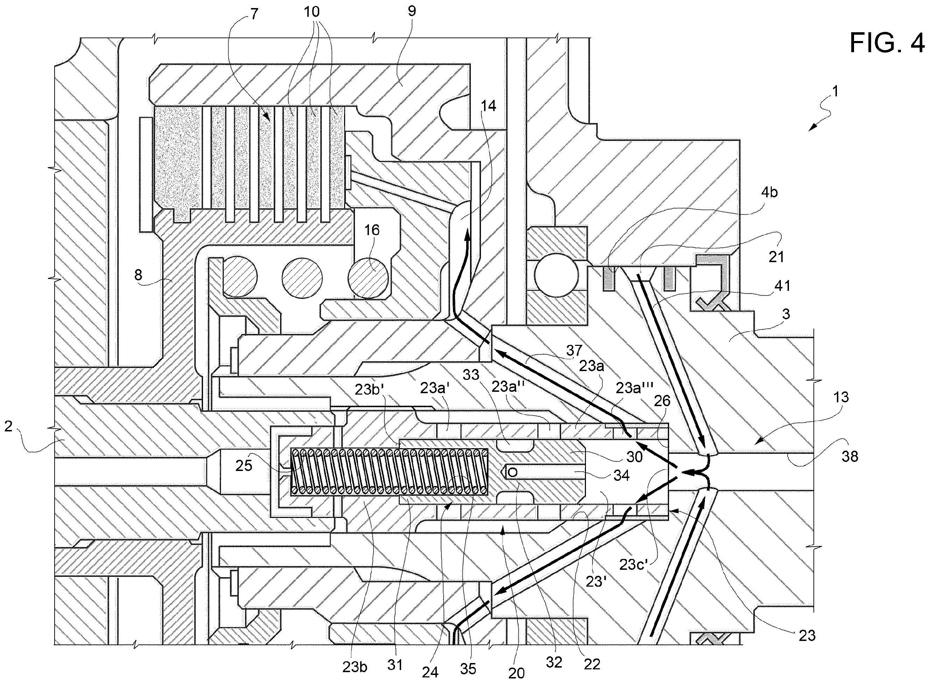

On the opposite side, the second shaft 3 defines a shoulder 26 configured to axially delimit the movement along axis A of spool 24. According to the above described configuration, the spool 24 may move between a first position along axis A into which it is in contact with shoulder 26 (see figure 1) and a second position wherein it is in contact with axial wall 23b (see figures 2, 4).

The spool 24 preferably comprises a head portion 30, a terminal portion 31 and an intermediate portion 32 that extends between the head and terminal portions 30, 31. The head portions 30, 31 have a diameter substantially equal to the diameter of space 23' while the intermediate portion 32 has a diameter lower with respect to space 23' thereby providing an annular moving chamber 33 between the intermediate portion 33 and the housing 23.

The annular moving chamber 23' is fluidly connected to inner space 23' via a duct 34 realized inside the head and intermediated portions 30, 32 while the head and terminal portions 30, 31 moves inside the housing 23 in a fluid tight manner.

The head portion 30 is configured to selectively close opening 23c' while the terminal portion is faced to opening 23b' and defines a seat 27 for accommodating a terminal portion of elastic means 25. Accordingly, elastic means 25 acts between the terminal portion 31 and an element fixedly carried by first shaft 2 and pass through opening 23b'.

Coming back to lateral wall 23a of housing 23, it is provided with respective first, second and third radial openings 23a', 23a'', 23a'' realized along axis A and distanced between each other.

The first and second radial openings 23a', 23a'' are fluidly connected together and are both fluidly connected to opening 23b' of axial wall 23b thereby allowing fluidic communication within inner space 5 and, therefore, to lamellas 10 of clutch assembly 7.

Each of the third radial openings 23a‴ is fluidly connected to chamber 14 via a respective duct 37 realized through the second shaft 3 and the second intermediate element 9. In particular, such duct 37 is realized inclined with respect to longitudinal axis A.

In greater detail, the third radial openings 23a‴ are realized in proximity of opening 23c' while the first radial openings 23a' are realized in proximity of opening 23b'. Accordingly, second and third radial openings 23a", 23a‴ are positioned so as to be opened and/or closed partially/completely by head portion 30 while first and second radial openings are positioned so as to be opened and/or closed partially/completely by terminal portion 31. Second radial openings 23a"' are furthermore configured to be in fluid communication with moving chamber 33, according to the position of spool 24.

The opening 23c' of housing 23 is, as said, connected to source 21 of fluid. In particular, the opening 23c' is fluidly connected to a channel 38 realized in second shaft 3 and preferably coaxial to axis A. In particular, making reference to figure 1, channel 38 defines from one side the abode described shoulder 26 and from the opposite sides preferably extends through all the second shaft 3 till possibly allowing its fluid communication with the environment.

In detail, such fluid communication with the environment is normally avoided by a terminal plug 39 and permitted solely for maintenance purpose by extracting such plug from channel 38.

Channel 38 is fluidly connected to the source 21 via at least a duct 41. In the disclosed embodiment, duct 41 is inclined with respect to axis A and entirely realized in output shaft 3.

The value of pressure coming from source 21 may be modulated by a control valve, not shown, configured to regulate the value of the pressure of fluid sent in duct 41 towards valve 20. The pressure of the fluid may vary till reaching an engagement pressure pₛₑₜ configured to allow the movement of the actuator element 11, i.e. the engagement of clutch 7.

The operation of the PTO assembly comprising a hydraulic arrangement according to the invention and described as above is the following.

In the operating condition of figure 1, the pressure p₀ in conduit 41/channel 38 is lower than engagement pressure pₛₑₜ and the force exerted by the fluid to head portion 30 of spool 24 is no sufficient to overcome the force imparted by elastic means 25. In such configuration, movable chamber 33 is isolated from inner space 5 and therefore the oil coming from duct 34 cannot flow towards this latter.

In the operating condition of figure 3, the pressure p₁ in conduit 41/channel 38 is lower than engagement pressure pₛₑₜ but the force exerted by the fluid to head portion 30 of spool 24 is sufficient to overcome partially the force imparted by elastic means 25 thereby partially moving the spool 24. In such configuration a quantity of the fluid in channel 38 passes in duct 37 thereby starting to pressurize chamber 14 but not in a sufficient manner to move actuator element 11. Another quantity of the fluid in channel 38 passes in duct 34 to mobile chamber 33. Thus, fluid can pass from mobile chamber 33 via second and first openings 23a", 23a' towards the opening 23b' on axial wall 23b and therefore to inner space 25 in order to lubricate lamellas 10.

In the operation condition of figures 2-4 the pressure p₂ in conduit 41/channel 38 is equal or greater than engagement pressure pₛₑₜ and therefore the force exerted by the fluid to head portion 30 of spool 24 is sufficient to overcome the force imparted by elastic means 25 thereby moving the spool 24 till the terminal portion 31 contacts the axial wall 23b. In such configuration, a quantity of the fluid in channel 38 passes in duct 37 thereby pressurizing chamber 14 so that the force exerted by the fluid on disc portion 11b of actuator 11 moves these latter against lamellas 10 engaging the clutch assembly 7. In this way, first and second intermediate elements 8, 9 are engaged and therefor torque may be transmitted between first and second shafts 2, 3. A portion of fluid passes in inner space 5 by duct 15 to clutch assembly 7. The quantity of the fluid in channel 38 passing in duct 34 and in mobile chamber 33 cannot pass to inner space 5 because second and first openings 23a'', 23a' are closed by terminal portion 31 and head portion 30.

In view of the above operation, the present invention is also directed to a method for cooling a clutch assembly that is controlled via a pressure value p2 coming from a source 21 of fluid in pressure and configured to allow the engagement of the clutch assembly, and comprising the following phases:
- receiving a request to cool the clutch assembly 7; and
- controlling the pressure coming from source (21 so as to vary the pressure of the fluid flowing towards the clutch assembly 7, the pressure value p being lower with respect to a value p2 for engaging the clutch assembly 7.

In particular, the method may be applied to the disclosed arrangement, i.e. to a method for lubricating/cooling lamellas 10 of the clutch assembly 7 by controlling valve means of PTO assembly 1 to provide a pressure of fluid towards valve 20 that is not sufficient to allows the actuation of clutch assembly 7 but grater to allow a preset movement of the spool 24 sufficient to allow fluidic communication between the source 21 and the inner space 5 housing the clutch assembly 7.

The aforementioned method can be performed by an electronic control valve controlled by an electronic unit (not shown) upstream to the disclosed source (21) and configured to vary the value of pressure provided by this latter. The cooling is performed every time at the movement of spool 24 (i.e. at each engagement or disengagement of clutch assembly 7) but can be requested actively, e.g. by detecting a high temperature of oil in inner space 5 or of lamellas via proper sensors and therefore controlling the pressure of source 21 to provide a suitable cooling phase.

It is clear that the oil provided to lamellas 10, i.e. to inner space 5 flows towards a discharge, that is not shown, after having lubricated the clutch assembly 7.

In view of the foregoing, the advantages of PTO assembly comprising a hydraulic arrangement according to the invention are apparent.

The proposed hydraulic arrangement 13 is particularly compact and does not require peculiar piping as in the known PTO assembly. Therefore, the costs for manufacturing and maintenance of such POT assembly is reduced.

Moreover, the peculiar valve assembly 20 provided allows both to:
- Cool down lamellas 10 when the spool 24 starts to be engaged by the increasing fluid pressure thanks to the pressure p₂ that allows a partial openings of the valve 20 thereby providing oil to lamellas 10; and
- Lubricate lamellas 10 when the spool 24 is totally actuated thanks to duct 15 that drain parts of the fluid towards the engaged lamellas 10.

Therefore, the useful life of the clutch assembly 7, and therefore of PTO assembly 1, is improved.

It is clear that modifications can be made to the described PTO assembly comprising a hydraulic arrangement which do not extend beyond the scope of protection defined by the claims.

For example, it is clear that the proposed hydraulic arrangement may be realized between two shafts that are not an input shaft 2 and an output shaft 3 of a PTO assembly as described.

Furthermore, it is clear that the described intermediate elements 8, 9 and actuator 9 or the geometry/ typology of clutch 7 and lamellas 10 may be varied according the dimensions of the PTO.

Moreover, the topology of the disclosed conduits and the geometry of openings on valve 20 and of spool 24 may be varied maintaining the same claimed essential features.

## Claims

1. - Power Take-off assembly, PTO assembly, (1) for a work vehicle, said PTO assembly (1) comprising a first and a second shaft (2, 3) and a clutch assembly (7) comprising a plurality of lamellas (10) and configured to couple said first and second shaft (3),
said PTO assembly (1) comprising a housing (4) defining an inner space (5), said clutch assembly (7) and at least an inner portion (2b, 3b) of said shafts (2, 3) being housed in said inner space (5),
said PTO assembly (1) comprising a hydraulic arrangement (13) for managing the flow of fluid from a source (21) of said work vehicle towards said clutch assembly (7), said hydraulic arrangement (13) comprising a valve (20), said valve (20) being housed in a seat (22) realized within at least one between said shafts (2, 3), the source (21) being fluidly connected to said valve (20) via at least a conduit (38, 41) realized within said at least one between said shafts (2, 3), said PTO assembly being **characterized in that** said valve (20) comprises a housing (23) housed in said seat (22) and a spool (24) arranged within said housing (23) in a movable manner parallel to a longitudinal axis (A) of said at least one between said shafts (2, 3), said housing (23) defining a plurality of openings (23a', 23a", 23a‴, 23c') configured to be opened or closed, partially or completely, by said spool (24) that is actuated by the pressure of fluid in said at least a conduit (38, 41),
and wherein said valve (20) comprises elastic means (25) housed within said housing (23) and configured to impart a force to said spool (24) that is opposite to the force applied by the pressure applied by fluid in said at least a conduit (38, 41).

2. - Power take-off assembly according to claim 1, wherein said housing (23) comprises:
- a lateral wall (23a) defining said first, a second and a third plurality of radial openings (23a', 23a", 23a‴);
- an axial wall (23b) defining said axial opening (23b');
said housing (23) being opened via said aii axial opening (23c') on the axial side opposed to said axial wall (23b),
said spool (24) comprising a head portion (30), a terminal portion (31) opposite to said head portion (30) and an intermediate portion (32),
said head and intermediate portions (30, 32) sliding in contact with said lateral wall (23a) while said intermediate portion (32) defines a movable chamber (33), said movable chamber (33) being fluidly connected to said at least one conduit (38, 41) via a duct (34) realized in said spool (24).

3. - Power take-off according to claim 2, wherein in function of the position of said spool (24) along said axis (A),
said head portion (30) is configured to cooperate with said axial opening (23c') and with said second and third radial openings (23a", 23a‴),
said terminal portion (31) is configured to cooperate with first and second radial openings (23a', 23a") and
said movable chamber (33) being configured to be fluidly connected to said second radial openings (23a").

4. - Power take-off assembly according to claims 2 or 3, wherein said first and second radial openings (23a', 23a") are fluidly connected together and to said axial opening (23b'), said axial opening (23b') being fluidly connected to said inner space (5).

5. - Power take-off assembly according to any of claims 2 to 4, comprising an actuator element (11) configured to slide in tight manner with respect to an intermediate element (8, 9) engaged with one of said first and second shafts (2, 3), said actuator element (11) defining with respect to said intermediate element (8, 9) a chamber (14), said chamber (14) being configured to be fluidly in communication with said at least one conduit (38, 41) in function of the position of said valve (20).

6. - Power take-off assembly according to claim 5, wherein said chamber (14) is fluidly connected to said third radial openings (23a‴) via a duct (37) said duct (37) being realized in said intermediate element (8, 9).

7. - Power take-off according to claim 6, wherein said actuator element (1) defines a second duct (15) fluidly connecting said chamber (14) with said inner space (5).

8. -Power take-off assembly according to claim 6 or 7, comprising said elastic means (16) housed in said inner space (5) and configured to impart a force to said actuator element (11) that is opposite to the force applied by the pressure applied by fluid in said chamber (14).

9. - Power take-off assembly according to any of claims 5 to 8, wherein when the pressure in said at least a duct (38, 41) has a value (p1) lower than a pressure value (p2) suitable to move said actuator element (11) but greater to move said spool (24), said movable chamber (33) is in fluid communication with said second radial openings (23a") and said third radial openings (23a‴) are in fluid communication with said at least a channel (38) ol.

10. Power take-off assembly according to any of the preceding claims, wherein said first and second shafts (2, 3) are coaxial about a common longitudinal axis (A), said valve (20) being coaxial to said longitudinal axis (A).

11. - Power take-off assembly according to any of the preceding claims, wherein said at least a duct comprises a channel (38) realized coaxial to said longitudinal axis (A) and passing through said shaft (2, 3) and at least a duct (41) configured to fluidly connect said channel (38) with said source (21).

12. Power take-off assembly according to claim 11, wherein said shaft comprises a removable plug (39) configured to avoid fluid communication of said channel (38) with environment at an axial side opposite to the one cooperating with said valve (20).

13. Method for cooling a clutch assembly (7) in a power take-off assembly as defined in any of claims 1 to 12, that is controlled via a pressure value (p2) coming from a source (21) of fluid in pressure and configured to allow the engagement of said clutch assembly, said method comprising the following phases:
- receiving a request to cool said clutch assembly (7)
- controlling the pressure coming from said source (21) so as to vary the pressure of said fluid flowing towards said clutch assembly (7), said pressure value (p1) being lower with respect to a value (p2) for engaging said clutch assembly (7).

## Patentansprüche

1. Zapfwellenanordnung (PTO-Anordnung) (1) für ein Arbeitsfahrzeug,
wobei die Zapfwellenanordnung (1) eine erste und eine zweite Welle (2, 3) und eine Kupplungsanordnung (7) mit einer Mehrzahl von Lamellen (10) aufweist, die dazu eingerichtet ist, die erste und die zweite Welle (3) miteinander zu koppeln,
wobei die Zapfwellenanordnung (1) ein Gehäuse (4) aufweist, das einen Innenraum (5) definiert, wobei die Kupplungsanordnung (7) und zumindest ein innerer Abschnitt (2b, 3b) der Wellen (2, 3) in dem Innenraum (5) angeordnet sind,
wobei die Zapfwellenanordnung (1) eine Hydraulikanordnung (13) zur Steuerung des Flusses an Fluid von einer Quelle (21) des Arbeitsfahrzeugs in Richtung der Kupplungsanordnung (7) aufweist, wobei die Hydraulikanordnung (13) ein Ventil (20) aufweist, wobei das Ventil (20) in einem Sitz (22) eingehaust ist, der innerhalb zumindest einer aus den beiden Wellen (2, 3) realisiert ist, wobei die Quelle (21) fluidisch mit dem Ventil (20) über zumindest eine Leitung (38, 41) verbunden ist, die innerhalb zumindest einer aus den beiden Wellen (2, 3) realisiert ist, wobei die Zapfwellenanordnung **dadurch gekennzeichnet ist, dass** das Ventil (20) ein Gehäuse (23), das in dem Sitz (22) aufgenommen ist, und einen Kolben (24) aufweist, der innerhalb des Gehäuses (23) parallel zu einer Längsachse (A) zumindest einer der beiden Wellen (2, 3) bewegbar ist, wobei das Gehäuse (23) eine Mehrzahl von Öffnungen (23a', 23a", 23a‴, 23c') definiert, die dazu eingerichtet sind, teilweise oder vollständig durch den Kolben (24), der durch den Fluiddruck in der zumindest einen Leitung (38, 41) betätigt wird, geöffnet oder geschlossen zu werden,
und wobei das Ventil (20) elastische Mittel (25) aufweist, die innerhalb des Gehäuses (23) aufgenommen sind und die dazu eingerichtet sind, eine Kraft auf den Kolben (24) auszuüben, die entgegen der aufgewendeten Kraft wirkt, die durch den Druck, der mittels des Fluids in der zumindest einen Leitung (38, 41) beaufschlagt ist, anliegt.

2. Zapfwellenanordnung nach Anspruch 1, wobei das Gehäuse (23) aufweist:
- eine laterale Wand (23a), die die erste, eine zweite und eine dritte Mehrzahl von radialen Öffnungen (23a', 23a", 23a‴) definiert;
- eine axiale Wand (23b), die die axiale Öffnung (23b') definiert;
wobei das Gehäuse (23) über die axiale Öffnung (23c') auf der axialen Seite, die gegenüberliegend zu der axialen Wand (23b) ist, geöffnet ist,
wobei der Kolben (24) einen Kopfabschnitt (30), einen Endabschnitt (31), der gegenüberliegend zu dem Kopfabschnitt (30) ist, und einen Zwischenabschnitt (32) aufweist,
wobei der Kopfabschnitt (30) und der Zwischenabschnitt (32) in Kontakt mit der Seitenwand (23a) gleiten, während der Zwischenabschnitt (32) eine bewegbare Kammer (33) definiert, wobei die bewegbare Kammer (33) fluidisch mit der zumindest einen Leitung (38, 41) über einen Leitungskanal (34), der innerhalb des Kolbens (24) realisiert ist, verbunden ist.

3. Zapfwellenanordnung nach Anspruch 2, wobei in Abhängigkeit von der Position des Kolbens (24) entlang der Achse (A)
der Kopfabschnitt (30) dazu eingerichtet ist, mit der axialen Öffnung (23c') und mit den zweiten und dritten radialen Öffnungen (23a", 23a‴) zusammen zu wirken,
der Endabschnitt (31) dazu eingerichtet ist, mit ersten und zweiten radialen Öffnungen (23a', 23a") zusammenzuwirken, und
die bewegbare Kammer (33) dazu eingerichtet ist, fluidisch mit den zweiten radialen Öffnungen (23a") verbunden zu sein.

4. Zapfwellenanordnung nach Anspruch 2 oder 3, wobei die ersten und die zweiten radiale Öffnungen (23a', 23a") miteinander und mit der axialen Öffnung (23b') fluidisch verbunden sind, wobei die axiale Öffnung (23b') fluidisch mit dem Innenraum (5) verbunden ist.

5. Zapfwellenanordnung nach einem der Ansprüche 2 bis 4, die ein Betätigungselement (11) aufweist, das dazu eingerichtet ist, in dichter Art und Weise in Bezug zu einem Zwischenelement (8, 9), das mit einer aus der ersten und der zweiten Welle (2, 3) eingreift, zu gleiten, wobei das Betätigungselement (11) in Bezug zu dem Zwischenelement (8, 9) eine Kammer (14) definiert, wobei die Kammer (14) dazu eingerichtet ist, in Abhängigkeit von der Position des Ventils (20) in fluidischer Verbindung mit der zumindest einen Leitung (38, 41) zu sein.

6. Zapfwellenanordnung nach Anspruch 5, wobei die Kammer (14) fluidisch mit den dritten radialen Öffnungen (23a‴) über einen Leitungskanal (37) verbunden ist, wobei der Leitungskanal (37) in dem Zwischenelement (8, 9) realisiert ist.

7. Zapfwellenanordnung nach Anspruch 6, wobei das Betätigungselement (1) einen zweiten Leitungskanal (15) definiert, der die Kammer (14) fluidisch mit dem Innenraum (5) verbindet.

8. Zapfwellenanordnung nach Anspruch 6 oder 7, die die elastischen Mittel (16) aufweist, die in dem Innenraum (5) aufgenommen sind und die dazu eingerichtet sind, eine Kraft auf das Betätigungselement (11) auszuüben, die entgegen der Kraft gerichtet ist, die durch den Druck, der mittels des Fluids innerhalb der Kammer (14) beaufschlagt ist, anliegt.

9. Zapfwellenanordnung nach einem der Ansprüche 5 bis 8, wobei, wenn der Druck in dem zumindest einen Leitungskanal (38, 41) einen Wert (p1) beträgt, der geringer als ein Druckwert (p2) ist, welcher geeignet ist, das Betätigungselement (11) zu bewegen, aber zum Bewegen des Kolbens (24) ausreichend groß ist, die bewegbare Kammer (33) in fluidischer Verbindung mit den zweiten radialen Öffnungen (23a") ist und die dritten radialen Öffnungen (23a‴) in fluidischer Verbindung mit dem zumindest einen Kanal (38) sind.

10. Zapfwellenanordnung nach einem vorhergehenden Ansprüche, wobei die erste und die zweite Welle (2, 3) koaxial zu einer gemeinsamen Längsachse (A) sind, wobei das Ventil (20) koaxial zu der Längsachse (A) ist.

11. Zapfwellenanordnung nach einem der vorhergehenden Ansprüche, wobei der zumindest eine Leitungskanal einen Kanal (38) aufweist, der koaxial zu der Längsachse (A) ist und der die Welle (2, 3) und zumindest einen Leitungskanal (41) durchdringt, der dazu eingerichtet ist, den Kanal (38) mit der Quelle (21) fluidisch zu verbinden.

12. Zapfwellenanordnung nach Anspruch 11, wobei die Welle einen entfernbaren Stopfen (39) aufweist, der dazu eingerichtet ist, eine fluidische Verbindung des Kanals (38) mit einer Umgebung an der Axialseite, die gegenüber zu der Seite ist, die mit dem Ventil (20) zusammenwirkt, zu verhindern.

13. Verfahren zur Kühlung einer Kupplungsanordnung (7) in einer Zapfwellenanordnung nach einem der Ansprüche 1 bis 12, das über einen Druckwert (p2), der von einer Quelle (21) von unter Druck stehendem Fluid stammt, gesteuert ist und das dazu eingerichtet ist, das Einrücken der Kupplungsanordnung zu ermöglichen, wobei das Verfahren die folgenden Schritte aufweist:
- Empfangen eines Befehls zur Kühlung der Kupplungsanordnung (7),
- Steuerung des Drucks, der von der Quelle (21) stammt, so dass der Fluiddruck, der in Richtung der Kupplungsanordnung (7) strömt, variiert wird, wobei der Druckwert (p1) niedriger als ein Wert (p2) zum Einrücken der Kupplungsanordnung (7) ist.

## Revendications

1. Ensemble de prise de force, ensemble de PDF, (1) pour un véhicule de travail,
ledit ensemble de PDF (1) comprenant un premier et un second arbre (2, 3) et un ensemble embrayage (7) comprenant une pluralité de lamelles (10) et configuré pour coupler lesdits premier et second arbres (3),
ledit ensemble de PDF (1) comprenant un boîtier (4) définissant un espace intérieur (5), ledit ensemble embrayage (7) et au moins une partie intérieure (2b, 3b) desdits arbres (2, 3) étant logés dans ledit espace intérieur (5),
ledit ensemble de PDF (1) comprenant un agencement hydraulique (13) pour gérer le débit de fluide à partir d'une source (21) dudit véhicule de travail vers ledit ensemble embrayage (7), ledit dispositif hydraulique (13) comprenant une vanne (20), ladite vanne (20) étant logée dans un siège (22) réalisé à l'intérieur d'au moins un parmi lesdits arbres (2, 3), la source (21) étant raccordée fluidiquement à ladite vanne (20) par l'intermédiaire d'au moins un conduit (38, 41) réalisé à l'intérieur dudit au moins un parmi lesdits arbres (2, 3), ledit ensemble PDF étant **caractérisé en ce que** ladite vanne (20) comprend un boîtier (23) logé dans ledit siège (22) et un tiroir (24) disposé à l'intérieur dudit boîtier (23) de manière mobile parallèlement à un axe longitudinal (A) dudit au moins un parmi lesdits arbres (2, 3), ledit boîtier (23) définissant une pluralité d'ouvertures (23a', 23a", 23a‴, 23c') configuré pour être ouvert ou fermé, partiellement ou complètement, par ledit tiroir (24) qui est actionné par la pression du fluide dans ledit au moins un conduit (38, 41),
et dans lequel ladite vanne (20) comprend des moyens élastiques (25) logés à l'intérieur dudit boîtier (23) et configurés pour transmettre une force audit tiroir (24) qui est opposée à la force appliquée par la pression appliquée par le fluide dans ledit au moins un conduit (38, 41).

2. .- Ensemble de prise de force selon la revendication 1, dans lequel ledit boîtier (23) comprend :
- une paroi latérale (23a) définissant ladite première, une deuxième et une troisième pluralité d'ouvertures radiales (23a', 23a', 23a‴) ;
- une paroi axiale (23b) définissant ladite ouverture axiale (23b') ;
ledit boîtier (23) étant ouvert par l'intermédiaire de ladite ouverture axiale (23c') sur le côté axial opposé à ladite paroi axiale (23b),
ledit tiroir (24) comprenant une partie initiale (30), une partie terminale (31) opposée à ladite partie initiale (30) et une partie intermédiaire (32),
lesdites parties initiale et intermédiaire (30, 32) coulissant en contact avec ladite paroi latérale (23a) tandis que ladite partie intermédiaire (32) définit une chambre mobile (33), ladite chambre mobile (33) étant raccordée fluidiquement audit au moins un conduit (38, 41) par l'intermédiaire d'un conduit (34) réalisé dans ledit tiroir (24).

3. .- Prise de force selon la revendication 2, dans laquelle en fonction de la position dudit tiroir (24) le long dudit axe (A)
ladite partie initiale (30) est configurée pour coopérer avec ladite ouverture axiale (23c') et avec lesdites deuxièmes et troisièmes ouvertures radiales (23a", 23a‴),
ladite partie terminale (31) est configurée pour coopérer avec les premières et deuxièmes ouvertures radiales (23a', 23a") et
ladite chambre mobile (33) étant configurée pour être raccordée fluidiquement auxdites deuxièmes ouvertures radiales (23a").

4. .- Ensemble de prise de force selon les revendications 2 ou 3, dans lequel lesdites premières et deuxièmes ouvertures radiales (23a', 23a") sont raccordées fluidiquement entre elles et à ladite ouverture axiale (23b'), ladite ouverture axiale (23b') étant raccordée fluidiquement audit espace intérieur (5).

5. .- Ensemble de prise de force selon l'une quelconque des revendications 2 à 4, comprenant un élément actionneur (11) configuré pour coulisser de manière étanche par rapport à un élément intermédiaire (8, 9) en prise avec l'un desdits premier et second arbres (2, 3), ledit élément actionneur (11) définissant par rapport audit élément intermédiaire (8, 9) une chambre (14), ladite chambre (14) étant configurée pour être en communication fluidique avec ledit au moins un conduit (38, 41) en fonction de la position de ladite vanne (20).

6. .- Ensemble de prise de force selon la revendication 5, dans lequel ladite chambre (14) est raccordée fluidiquement auxdites troisièmes ouvertures radiales (23a‴) par l'intermédiaire d'un conduit (37), ledit conduit (37) étant réalisé dans ledit élément intermédiaire (8, 9).

7. .- Prise de force selon la revendication 6, dans laquelle ledit élément actionneur (1) définit un second conduit (15) raccordant fluidiquement ladite chambre (14) audit espace intérieur (5).

8. .- Ensemble de prise de force selon la revendication 6 ou la revendication 7, comprenant lesdits moyens élastiques (16) logés dans ledit espace intérieur (5) et configurés pour appliquer une force audit élément actionneur (11) qui est opposée à la force appliquée par la pression appliquée par le fluide dans ladite chambre (14).

9. .- Ensemble de prise de force selon l'une quelconque des revendications 5 à 8, dans lequel lorsque la pression dans ledit au moins un conduit (38, 41) a une valeur (pl) inférieure à une valeur de pression (p2) appropriée pour déplacer ledit élément actionneur (11) mais supérieure pour déplacer ledit tiroir (24), ladite chambre mobile (33) est en communication fluidique avec lesdites deuxièmes ouvertures radiales (23a") et lesdites troisièmes ouvertures radiales (23a‴) est en communication fluidique avec ledit au moins un canal (38).

10. .- Ensemble de prise de force selon l'une quelconque des revendications précédentes, dans lequel lesdits premier et second arbres (2, 3) sont coaxiaux autour d'un axe longitudinal commun (A), ladite vanne (20) étant coaxiale audit axe longitudinal (A).

11. .- Ensemble de prise de force selon l'une quelconque des revendications précédentes, dans lequel ledit au moins un conduit comprend un canal (38) réalisé de manière coaxiale par rapport audit axe longitudinal (A) et traversant ledit arbre (2, 3) et au moins un conduit (41) configuré pour raccorder fluidiquement ledit canal (38) à ladite source (21).

12. . Ensemble de prise de force selon la revendication 11, dans lequel ledit arbre comprend un bouchon amovible (39) configuré pour éviter la communication fluidique dudit canal (38) avec l'environnement au niveau d'un côté axial opposé à celui coopérant avec ladite vanne (20).

13. . Procédé de refroidissement d'un ensemble embrayage (7) dans un ensemble de prise de force comme défini dans l'une quelconque des revendications 1 à 12, qui est commandé par l'intermédiaire d'une valeur de pression (p2) provenant d'une source (21) de fluide sous pression et configurée pour permettre l'engagement dudit ensemble embrayage, ledit procédé comprenant les phases suivantes :
- réception d'une demande de refroidissement dudit ensemble embrayage (7)
- contrôle de la pression provenant de ladite source (21) de manière à faire varier la pression dudit fluide s'écoulant vers ledit ensemble embrayage (7), ladite valeur de pression (pl) étant inférieure par rapport à une valeur (p2) d'engagement dudit ensemble embrayage (7).
